# EUROPÄISCHE PATENTANMELDUNG

(11) **EP 1 166 970 A2**
(43) Veröffentlichungstag der Anmeldung: **02.01.2002**
(21) Anmeldenummer: 01810578.3
(22) Anmeldetag: 14.06.2001
(51) Int. Cl.: B25D 16/00

(54) **Elektrohandwerkzeuggerät mit Schlagwerk**

(30) Priorität: 24.06.2000 DE 10030962
(71) Anmelder: HILTI Aktiengesellschaft, 9494 Schaan (LI)
(72) Erfinder: Bongers-Ambrosius, Hans-Werner, 81477 München (DE); Gerold, Peter, 82362 Weilheim (DE)
(74) Vertreter: Wildi, Roland

(57) **Zusammenfassung**

Ein Elektrohandwerkzeuggerät (1) mit einem Schlagwerk (2) mit einem, im Auftreffbereich (6) eines Döppers (3) auf die Stirnseite eines in eine Werkzeugaufnahme (4) aufgenommenen Werkzeugs (7) ausgebildeten, Ringkanal (8) dessen aussenseitige Öffnung (9) mit einem Luft saugenden Lüftungssystem (5) eines Elektromotors verbunden ist.

## Beschreibung

Die Erfindung bezeichnet ein zumindest teilweise schlagendes Elektrohandwerkzeuggerät mit Schlagwerk, wie einen Bohrhammer, einen Meisselhammer oder einen Kombihammer, vorzugsweise zum abrasiven Materialabtrag von Gestein.

Bei derartigen Elektrohandwerkzeuggeräten mit Schlagwerk, bspw. einem elektropneumatischem, wird der von einem Flugkolben erzeugte Schlag über einen Döpper auf die Stirnfläche eines in eine Werkzeugaufnahme begrenzt axial beweglich aufgenommenen Werkzeugs übertragen.

Beim abrasiven Materialabtrag entstehender Staub breitet sich als Kriechstaub bevorzugt an den Flächen des Werkzeugs entlang aus und gelangt unter Umgehung von Dichtungsmitteln zumindest teilweise in den Arbeitsbereich des Döppers, wo er sich anhäuft, um schliesslich weiter in das Schlagwerk und Getriebe zu gelangen. Gerade im Getriebe wird durch Staub der Verschleiss der Zahnradflanken wesentlich erhöht. Dieser erheblich höhere Verschleiss der bewegten Bauteile vermindert somit wesentlich die Lebensdauer des Elektrohandwerkzeuggerätes.

Nach der FR806543 ist bei einem Presslufthammer ein in der Werkzeugaufnahme angeordneter Freiraum im Auftreffbereich, bei welchem ein Döpper auf die Stirnfläche eines Werkzeugs schlägt, über eine radiale Öffnung mit dem Äusseren verbunden. Durch den am Werkzeug anliegenden, innen liegenden Döpper wird somit in diesem Freiraum ein im Auftreffbereich den Döpper umgebender Ringkanal ausgebildet. Vom Antrieb des Presslufthammers wird über einen Bypass sowie über einen ringförmigen Spülkanal der Ringraum mit Pressluft versorgt, welche schliesslich mit dem über das Werkzeug eingetragenen Staub über die Öffnung entweicht. Eine derartige Lösung ist für ein Elektrohandwerkzeuggerät, welches nicht über Pressluft verfügt, ungeeignet.

Nach der US4553610 ist ein Ringkanal im Aufnahmebereich des Werkzeugs eines hydraulisch betätigten Handwerkzeuggerätes über einen Bypass über ein Einlassventil mit einem einen schlagenden Kolben beinhaltenden Pumpraum verbunden, welcher wiederum über ein Einlassventil mit dem Äusseren verbunden ist. Die über die Hin- und Herbewegung des Kolbens erzeugte Druckluft entweicht mit eingedrungenem Staub längs des in der Werkzeugaufnahme aufgenommenen Werkzeugs und wirkt durch die Luftströmung dem Eindringen von Staub entlang der Mantelflächen des Werkzeugs entgegen.

Nach der EP0346597A1 wird mit dem Erregerkolben eines hydraulisch betätigten Handwerkzeuggerätes ein Pumpraum ausgebildet, dessen Druckluft über einen Bypass zu einem einen Döpper und ein in die Werkzeugaufnahme aufgenommenes Werkzeug beinhaltenden Ringraum gelangt und zusammen mit dem eingedrungenen Staub längs der Mantelflächen des Werkzeugs nach aussen gelangt. Nachteilig bei einer derartigen Lösung ist insbesondere der auch eine Ausbreitung entlang des Döppers in das Innere des Handwerkzeuggerätes fördernde Druck im Ringraum.

Die Aufgabe der Erfindung besteht in der Verhinderung des Staubeintritts in das Schlagwerk und weiter in das Getriebe eines Elektrohandwerkzeuggerätes.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird über einen im Auftreffbereich eines Döppers auf die Stirnseite des in der Werkzeugaufnahme aufgenommenen Werkzeugs ausgebildeten Ringkanal, welcher über eine oder mehrere Öffnungen mit dem Lüftungssystem des Elektromotors integriert ist, der entlang der Mantelflächen des Werkzeugs in den Auftreffbereich gelangte Staub über einen vom Lüftungssystem des Elektromotors erzeugten Unterdruck abgesaugt.

Durch die Absaugung des Staubes über einen Untergrund wird dieser insbesondere an einem weiteren Vordringen über den Döpper in das Schlagwerk und weiter in das Getriebe gehindert.

Vorteilhaft ist der Ringkanal über einen Bypass im Lüftungssystem des Elektromotors integriert, wodurch der Motor nicht mit der staubbeladenen Luft verunreinigt wird.

Die Erfindung wird bezüglich eines vorteilhaften Ausführungsbeispiels näher erläutert mit:
Fig. 1 als Elektrohandwerkzeuggerät mit Schlagwerk
Fig. 2 als Einzelheit zu Fig. 1.

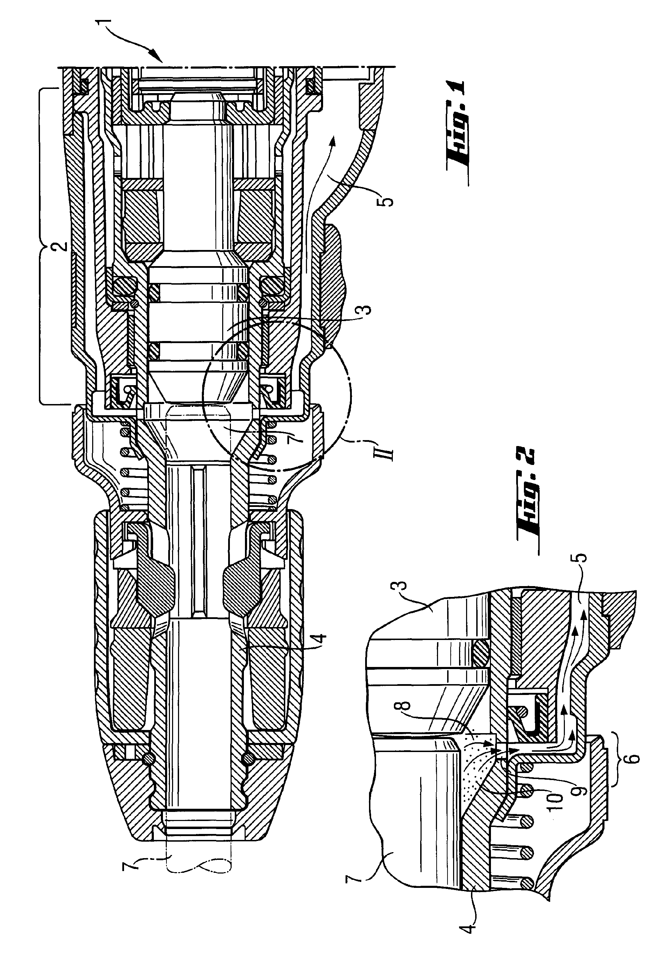

Nach Fig. 1 weist ein im Schnitt in Arbeitsstellung dargestelltes Elektrohandwerkzeuggerät 1 ein Schlagwerk 2 mit einem Döpper 3, eine Werkzeugaufnahme 4 und ein Lüftungssystem 5, welches als Bypass ausgeführt ist, des nicht dargestellten Elektromotors auf.

Die Einzelheit II aus Fig. 1 zeigt nach Fig. 2 einen in einem Auftreffbereich 6 eines Döppers 3 auf die Stirnseite des in der Werkzeugaufnahme 4 aufgenommenen Werkzeugs 7 ausgebildeten Ringkanal 8 auf, welcher über eine oder mehrere Öffnungen 9 mit dem saugenden Lüftungssystem 5 verbunden ist. Der entlang der Mantelflächen des Werkzeugs 7 in den Auftreffbereich 6 gelangte Staub 10 wird über einen vom Lüftungssystem 5 erzeugten Unterdruck abgesaugt.

## Patentansprüche

1. Elektrohandwerkzeuggerät mit Schlagwerk mit einem, im Auftreffbereich (6) eines Döppers (3) auf die Stirnseite eines in eine Werkzeugaufnahme (4) aufgenommenen Werkzeugs (7) ausgebildeten, Ringkanal (8), welcher zumindest eine aussenseitige Öffnung (9) aufweist, **dadurch gekennzeichnet, dass** die aussenseitige Öffnung (9) des Ringkanals (8) mit einem Luft saugenden Lüftungssystem (5) eines Elektromotors verbunden ist.

2. Elektrohandwerkzeuggerät nach Anspruch 1, **dadurch gekennzeichnet, dass** der Ringkanal (8) über einen Bypass im Lüftungssystem (5) des Elektromotors integriert ist.
